# EUROPÄISCHE PATENTSCHRIFT

(11) **EP 1 317 400 B1**
(45) Veröffentlichungstag und Bekanntmachung des Hinweises auf die Patenterteilung: **25.08.2004**
(21) Anmeldenummer: 01965259.3
(22) Anmeldetag: 06.09.2001
(51) Int. Cl.: C01B 33/02, C01B 33/107

(54) **VERFAHREN ZUR HERSTELLUNG VON TRICHLORSILAN**
METHOD FOR PRODUCING TRICHLOROSILANE
PROCEDE DE FABRICATION DE TRICHLOROSILANE

(30) Priorität: 11.09.2000 DE 10044794
(43) Veröffentlichungstag der Anmeldung: 11.06.2003
(73) Patentinhaber: SolarWorld Aktiengesellschaft, 53113 Bonn (DE)
(72) Erfinder: BULAN, Andreas, 40764 Langenfeld (DE); WEBER, Rainer, 51519 Odenthal (DE); BLOCK, Hans-Dieter, 51381 Leverkusen (DE)
(74) Vertreter: Rau, Albrecht
(86) Internationale Anmeldenummer: PCT/EP2001/010270
(87) Internationale Veröffentlichungsnummer: WO 2002/020404

(56) Entgegenhaltungen:
- DE-A- 19 654 154
- US-A- 5 716 590
- WALTER H ET AL: "MECHANISM OF THE SILICIDE-CATALYSED HYDRODEHALOGENATION OF SILICON TETRACHLORIDE TO TRICHLOROSILANE" JOURNAL OF THE CHEMICAL SOCIETY. FARADAY TRANSACTIONS, ROYAL SOCIETY OF CHEMISTRY, CAMBRIDGE, GB, Bd. 92, Nr. 22, 21. November 1996 (1996-11-21), Seiten 4605-4608, XP000634883 ISSN: 0956-5000

## Beschreibung

Die vorliegende Erfindung betrifft ein Verfahren zur Herstellung von Trichlorsilan durch Umsetzung von Silicium mit Siliciumtetrachlorid, Wasserstoff und gegebenenfalls Chlorwasserstoff.

Trichlorsilan HSiCl₃ ist ein wertvolles Zwischenprodukt beispielsweise zur Herstellung von hochreinem Silicium, von Dichlorsilan H₂SiCl₂, von Silan SiH₄ und von Haftvermittlern.

Hochreines Silicium findet vielseitige Verwendung für elektronische und fotovoltaische Zwecke, beispielsweise zur Herstellung von Solarzellen. Zur Herstellung von hochreinem Silicium wird beispielsweise metallurgisches Silicium in gasförmige Siliciumverbindungen, vorzugsweise Trichlorsilan, überführt, diese Verbindungen gereinigt und anschließend wieder in Silicium zurückgeführt.

Die Herstellung von Trichlorsilan erfolgt hauptsächlich durch Umsetzung von Silicium mit Chlorwasserstoff oder von Silicium mit Siliciumtetrachlorid, Wasserstoff und gegebenenfalls Chlorwasserstoff (Ullmann's Encyclopedia of Industrial Chemistry, 5^{th} ed. (1993), Vol. A24, 4-6). Die Reaktion von Silicium mit Siliciumtetrachlorid und Wasserstoff wird dabei in der Regel unter Einsatz von Katalysatoren durchgeführt, wobei hauptsächlich Kupferkatalysatoren zum Einsatz kommen.

So ist aus DE 41 04 422 A1 bekannt, die Umsetzung von Silicium mit Siliciumtetrachlorid und Wasserstoff in einem Wirbelbett ohne Anwendung von Druck in Gegenwart von Kupfersalzen einer niederen, aliphatischen, gesättigten Dicarbonsäure, insbesondere Kupferoxalat durchzuführen.

Ebenfalls ist es bekannt, die Reaktion von Silicium mit Siliciumtetrachlorid, Wasserstoff und gegebenenfalls Chlorwasserstoff in Gegenwart von pulverförmigem Kupfer (Chemical Abstracts CA 101, Nr. 9576d, 1984) oder von Gemischen aus Kupfermetall, Metallhalogeniden und Bromiden oder Iodiden von Eisen, Aluminium oder Vanadium (Chemical Abstracts CA 109, Nr. 57621b, 1988) durchzuführen.

Obwohl sich kupferhaltige Katalysatoren bei der Umsetzung von Silicium mit Siliciumtetrachlorid und Wasserstoff zu Trichlorsilan bewährt haben, ist der Einsatz der Kupferkatalysatoren bzw. der Kupfer enthaltenen Katalysatormischungen mit gewissen Nachteilen verbunden.

Die Umsetzung wird üblicherweise in der Wirbelschicht durchgeführt (Ullmann's Encyclopedia of Industrial Chemistry, 5^{th} ed. (1993), Vol. A24, 4-6). Aus der Wirbelschicht werden kleine Silicium/Katalysator-Partikel ausgetragen. Diese Silicium/Katalysator-Partikel enthalten hohe Konzentrationen des Katalysators und sind aufgrund der Feinheit meist pyrophor. In einem technischen Prozess müssen dieses zwangsweise anfallenden Silicium/Katalysator-Partikel aufgearbeitet und entsorgt werden.

Die Aufarbeitung solcher Partikel ist in der Regel aufwendig und kostenintensiv. Gemäß DE 195 07 602 Cl lassen sich siliciumhaltige Rückstände mit wässriger alkalischer Lösung oder Wasser behandeln. Eine weitere Verwendung, beispielsweise als Füll- oder Zusatzstoffe in der Bau- und/oder Gießereiindustrie, ist erst möglich, nachdem die behandelten Rückstände getrocknet und/oder gemahlen oder mit Zement und/oder Kalk enthaltenden Materialien vermischt, zu Grünkörpem verdichtet und gegebenenfalls ausgehärtet wurden.

Eine Verwendung der Silicium/Katalysator-Partikel z.B. in der Metallurgie ist aufgrund des hohen Kupfergehaltes nur bedingt möglich. EP 786 532 A2 beschreibt die Verwendung siliciumhaltiger Rückstände als Zusatz bei der Herstellung von Gusseisen. Dabei muss der siliciumhaltige Rückstand jedoch vor dem Einsatz aufwendig mit Kartonmasse und hydraulischem Zement versetzt und in Brikettform gebracht werden.

Auch die Deponierung der anfallenden Silicium/Katalysator-Partikel ist wegen des hohen Anteils des Schwermetalls Kupfer problematisch. Aus DE 43 18 613 A1 ist bekannt, dass aus Siliciumrückständen, die metallisches Kupfer enthalten, das Kupfer eluierbar ist. In DE 43 18 613 A1 wird daher eine komplexe Art der Deponierung vorgeschlagen, bei der die siliciumhaltigen Rückstände zusammen mit Schlacken aus metallurgischen Prozessen abgelagert werden. Die Folge ist, dass bei Einsatz von Kupferkatalysatoren hohe Entsorgungskosten entstehen.

Ein weiterer Nachteil ist, dass Kupferkatalysator vergleichsweise teuer ist. Aus dem Reaktor wird ungenutzter Katalysator über den Gasstrom ausgetragen. Dies erhöht die Menge an benötigtem Katalysator, da der ausgetragene Katalysator dem Reaktor wieder zugesetzt werden muss. Durch den Austragsverlust an teurem Katalysator entstehen also vergleichsweise hohe zusätzliche Kosten.

Die DE 196 54 154 A1 beschreibt ein Verfahren zur Herstellung von Trichlorsilan nach dem Oberbegriff des Anspruchs 1. Als Katalysatorsystem wird unter anderem eine Kombination aus Kupfersilicit und einer Eisenkomponente vorgeschlagen. Die Eisenkomponente kann als Metall oder Metallsilicit eingeführt werden.

Aus dem Journal Of The Chemical Society, Faraday Transactions, 92(1996), Nr. 22, Seiten 4605 bis 4608, ist ein Verfahren zur Herstellung von Trichlorsilan bekannt, bei dem eine Hydrodehalogenisierung von Tetrachlorsilan in Gegenwart eines Übergangsmetalls oder eines Übergangsmetallsilicits vorgenommen wird. Auch Eisensilicit kommt hierbei zum Einsatz.

Es bestand daher die Aufgabe, ein Verfahren zur Herstellung von Trichlorsilan aus Silicium, Wasserstoff, Siliciumtetrachlorid und gegebenenfalls Chlorwasserstoff zur Verfügung zu stellen, das obig genannte Nachteile nicht aufweist und insbesondere ohne Einsatz von Kupfer eine hohe Reaktionsgeschwindigkeit, bzw. hohe Raumzeitausbeute, aufweist.

Überraschenderweise wurde gefunden, dass bei Einsatz eines Siliciums, das Eisen enthält, wobei das Eisen als Eisensilicid homogen im Silicium verteilt vorliegt, die Reaktion dieses Siliciums mit Siliciumtetrachlorid, Wasserstoff und gegebenenfalls Chlorwasserstoff ausreichend katalysiert wird.

Gegenstand der Erfindung ist demnach ein Verfahren zur Herstellung von Trichlorsilan durch Umsetzung von Silicium mit Wasserstoff, Siliciumtetrachlorid und gegebenenfalls Chlorwasserstoff, das dadurch gekennzeichnet ist, dass Silicium eingesetzt wird, das homogen verteiltes Eisensilicid enthält.

Ein wesentlicher Vorteil des erfindungsgemäßen Einsatzes von Silicium, das homogen verteiltes Eisensilicid enthält, besteht darin, dass Silicium, das nicht umgesetzt und/oder aus dem Reaktor ausgetragen wird und entsorgt werden muss als Nebenkomponente im Wesentlichen Eisen enthält. Da Eisen im Gegensatz zum Kupfer keine Umweltprobleme verursacht, spielt die Eluierbarkeit aus dem Siliciumrückstand etwa bei einer Deponierung keine Rolle. Ein eisenhaltiger Siliciumrückstand ist darüber hinaus in der Metallurgie universell einsetzbar, wodurch sich die Entsorgung deutlich vereinfacht und eine Deponierung vermieden werden kann.

Ein weiterer Vorteil ist, dass der beim Einsatz herkömmlicher Katalysatoren erforderliche Verfahrensschritt der Mischung des Katalysators mit dem Silicium entfällt. Dies hat für die Produktionsanlage zur Herstellung von Trichlorsilan den Vorteil, dass Apparate für die Mischung von Katalysator und Silicium und Lagersilos für den Katalysator entfallen. Hierdurch wird der Investitions- und Personalaufwand geringer und eine kostengünstigere Herstellung wird ermöglicht.

Die Bindung des Eisens im Silcium verhindert zudem, dass Eisen bei einer Reaktionsführung in der Wirbelschicht als Feinstaub ausgetragen und somit während der Reaktion ergänzt werden muss, wie dies zum Teil bei Einsatz eines herkömmlichen Kupferkatalysators der Fall ist.

Ein weiterer Vorteil liegt darin, dass die nicht unerheblichen Kosten für den Katalysator deutlich gesenkt werden können, da der sehr preiswerte Katalysator Eisen direkt bei der Siliciumherstellung eingebracht werden kann.

Das erfindungsgemäß einzusetzende Silicium, das homogen verteiltes Eisensilicid enthält, kann beispielsweise dadurch hergestellt werden, dass eine Mischung aus Silicium und der gewünschten Menge Eisen aufgeschmolzen wird bzw. einer Siliciumschmelze Eisen in der gewünschten Menge beigegeben wird und die Schmelze anschließend schnell abgekühlt wird. Vorzugsweise erfolgt die Zugabe der gewünschten Menge an Eisen bereits bei der Herstellung des Siliciums.

Die schnelle Abkühlung der Schmelze kann beispielsweise durch Verdüsen der Schmelze in Luft oder durch Wassergranulation erfolgen.

Bevorzugt wird zur schnellen Abkühlung einer Siliciumschmelze und damit zur Herstellung des erfindungsgemäß einzusetzenden Siliciums die Wassergranulation eingesetzt. Bei der Wassergranulation wird flüssiges Silicium in Wasser eingetragen. Hierdurch kühlt das Silicium extrem schnell ab. Durch Wahl der Verfahrensparameter können beispielsweise Silicium-Pellets erhalten werden. Die Wassergranulation von Silicium ist beispielsweise aus EP 522 844 A2 bekannt.

Das Eisen liegt dann als fein und homogen verteiltes Eisensilicid im Silicium vor.

Vorzugsweise wird Silicium eingesetzt, das eine Konzentration an Eisen, in Form von homogen verteiltem Eisensilicid, im Silicium von 0,5 bis 10 Gew.-%, besonders bevorzugt von 1 bis 5 Gew.-% aufweist. Es ist jedoch auch möglich Silicium einzusetzen, das eine höhere Konzentration an Eisen aufweist.

Das erfindungsgemäße Verfahren kann beispielsweise bei einem Druck von 1 bis 40 bar (absolut), bevorzugt von 20 bis 35 bar durchgeführt werden.

Beispielsweise wird bei Temperaturen von 400 bis 800°C, bevorzugt von 450 bis 600°C, gearbeitet.

Die Wahl des Reaktors, in dem die erfindungsgemäße Umsetzung erfolgen soll, ist nicht kritisch, solange der Reaktor unter den Reaktionsbedingungen hinreichende Stabilität aufweist und den Kontakt der Ausgangsstoffe erlaubt. Beispielsweise kann in einem Festbettreaktor, einem Drehrohrofen oder einem Wirbelbettreaktor gearbeitet werden. Die Reaktionsführung in einem Wirbelbettreaktor ist bevorzugt.

Das Molverhältnis von Wasserstoff zu Siliciumtetrachlorid kann bei der erfindungsgemäßen Umsetzung beispielsweise 0,25:1 bis 4:1 betragen. Bevorzugt ist ein Molverhältnis von 0,6:1 bis 2:1.

Bei der erfindungsgemäßen Umsetzung kann Chlorwasserstoff zugegeben werden, wobei die Menge an Chlorwasserstoff in weiten Bereichen variiert werden kann. Bevorzugt wird Chlorwasserstoff in einer solchen Menge zugegeben, dass ein Molverhältnis von Siliciumtetrachlorid zu Chlorwasserstoff von 1:0 bis 1:10, besonders bevorzugt von 1:0,5 bis 1:1 resultiert.

Bevorzugt wird das erfindungsgemäße Verfahren in Gegenwart von Chlorwasserstoff durchgeführt.

In einer bevorzugten Ausgestaltungsform des erfindungsgemäßen Verfahrens wird kein zusätzlicher Katalysator, insbesondere kein zusätzlicher kupferhaltige Katalysator zugegeben.

Die erfindungsgemäße Verfahren führt verglichen mit einer Reaktionsführung unter Einsatz eines Kupferkatalysators bezüglich der Ausbeute und der Zeit, bis der stationäre Zustand der Reaktion erreicht wird, zu vergleichbaren Ergebnissen. Somit kann das erfindungsgemäße Verfahren mit nahezu gleicher Ausbeute betrieben werden, hat jedoch gegenüber dem Verfahren unter Einsatz eines Kupferkatalysators die genannten Vorteile.

Das nach dem erfindungsgemäßen Verfahren hergestellte Trichlorsilan kann beispielsweise zur Herstellung von Silan und/oder Reinst-Silicium verwendet werden.

Demnach betrifft die Erfindung auch ein Verfahren zur Herstellung von Silan und/oder Reinst-Silicium ausgehend von Trichlorsilan, das nach dem oben beschriebenen Verfahren erhalten wird.

Bevorzugt wird das erfindungsgemäße Verfahren in ein Gesamtverfahren zur Herstellung von Reinst-Silicium integriert.

Besonders bevorzugt wird das erfindungsgemäße Verfahren in ein mehrstufiges Gesamtverfahren zur Herstellung von Reinst-Silicium integriert, wie es beispielsweise in "Economics of Polysilicon Process, Osaka Titanium Co., DOE/JPL 1012122 (1985), 57-78" beschrieben ist und das folgende Schritte umfasst:
a) Herstellung von Trichlorsilan,
b) Disproportionierung von Trichlorsilan unter Gewinnung von Silan,
c) Reinigung des Silans zu Reinst-Silan und
d) Thermische Zersetzung des Silans in einem Wirbelbettreaktor unter Abscheidung von Reinst-Silicium auf Silicium-Partikeln, die das Wirbelbett bilden.

Das erfindungsgemäße Verfahren wird in den folgenden Beispielen näher erläutert, wobei die Beispiele jedoch nicht als Einschränkung des Erfindungsgedankens zu verstehen sind.

### Beispiele:

### Beispiel 1 (Vergleichsbeispiel)

In einem Reaktor, bestehend aus einem Glasrohr mit einem Durchmesser von 3 cm und einer Höhe von 18 cm mit eingebauter Glasfritte, wurde Silicium der Kornfraktion 315-425 µm mit Kupfer-I-chlorid gemischt. Die Mischung enthielt 1 Gew.-% Kupfer. 40 g dieser Mischung wurden auf 500°C aufgeheizt und durch einen Wendelrührer bewegt. Durch diese Schüttung wurde von unten ein Gasgemisch aus Wasserstoff und Siliciumtetrachlorid im Mol-Verhältnis 1,85:1 geleitet. Die Gasgeschwindigkeit betrug 0,41 cm/s, die Verweilzeit der Gasmischung in der Silicium-Schüttung betrug 11,8 s. Die Umsetzung erfolgte bei einem Druck von 1 bar (absolut). Die Ausbeute an Trichlorsilan betrug 12,4 % bezogen auf die Menge an eingesetztem Siliciumtetrachlorid. Die Dauer bis zum Erreichen des stationären Zustandes betrug ca. 60 min.

### Beispiel 2

In einem Reaktor, bestehend aus einem Glasrohr mit einem Durchmesser von 3 cm und einer Höhe von 18 cm mit eingebauter Glasfritte, wurden 40 g wassergranuliertes Silicium mit einem Eisengehalt von 2,3 Gew.-% der Kornfraktion 315-425 µm eingesetzt. Dieses Silicium wurde auf 500°C aufgeheizt und durch einen Wendelrührer bewegt. Durch diese Schüttung wurde von unten ein Gasgemisch aus Wasserstoff und Siliciumtetrachlorid im Mol-Verhältnis 1,85:1 geleitet. Die Gasgeschwindigkeit betrug 0,41 cm/s, die Verweilzeit der Gasmischung in der Silicium-Schüttung betrug 11,8 s. Die Umsetzung erfolgte bei einem Druck von 1 bar (absolut). Die Ausbeute an Trichlorsilan betrug 10,8 % bezogen auf die Menge an eingesetztem Siliciumtetrachlorid. Die Dauer bis zum Erreichen des stationären Zustandes betrug ca. 60 min.

## Patentansprüche

1. Verfahren zur Herstellung von Trichlorsilan durch Umsetzung von Silicium mit Wasserstoff, Siliciumtetrachlorid und gegebenenfalls Chlorwasserstoff, **dadurch gekennzeichnet, dass** Silicium eingesetzt wird, das homogen verteiltes Eisensilicid enthält.

2. Verfahren gemäß Anspruch 1, **dadurch gekennzeichnet, dass** das eingesetzte Silicium durch Wassergranulation hergestellt wird.

3. Verfahren gemäß mindestens einem der Ansprüche 1 bis 2, **dadurch gekennzeichnet, dass** die Konzentration des Eisens im Silicium 0,5 bis 10 Gew.-% beträgt.

4. Verfahren gemäß mindestens einem der Ansprüche 1 bis 3, **dadurch gekennzeichnet, dass** die Konzentration des Eisens im Silicium 1 bis 5 Gew.-% beträgt.

5. Verfahren gemäß mindestens einem der Ansprüche 1 bis 4, **dadurch gekennzeichnet, dass** die Umsetzung bei einem Druck von 1 bis 40 bar (absolut) durchgeführt wird.

6. Verfahren gemäß mindestens einem der Ansprüche 1 bis 5, **dadurch gekennzeichnet, dass** die Umsetzung bei Temperaturen von 400 bis 800°C durchgeführt wird.

7. Verfahren gemäß mindestens einem der Ansprüche 1 bis 6, **dadurch gekennzeichnet, dass** das Molverhältnis von Wasserstoff zu Siliciumtetrachlorid 0,25:1 bis 4:1 beträgt.

8. Verfahren gemäß mindestens einem der Ansprüche 1 bis 7, **dadurch gekennzeichnet, dass** bei der Umsetzung von Silicium mit Siliciumtetrachlorid und Wasserstoff Chlorwasserstoff zugegeben wird.

9. Verfahren gemäß mindestens einem der Ansprüche 1 bis 8, **dadurch gekennzeichnet, dass** das Molverhältnis von Siliciumtetrachlorid zu Chlorwasserstoff 1 : 0 bis 1 : 10 beträgt.

10. Verfahren zur Herstellung von Silan und/oder Reinst-Silicium, **dadurch gekennzeichnet, dass** von Trichlorsilan ausgegangen wird, das unter dem Einsatz von Silicium, das homogen verteiltes Eisensilicit enthält, hergestellt wird.

## Claims

1. A method for producing trichlorosilane by reacting silicon with hydrogen, silicon tetrachloride and, if necessary, hydrogen chloride, **characterized in that** a silicon is used which contains homogeneously distributed iron silicide.

2. A method according to Claim 1, **characterized in that** the silicon used is produced by means of water granulation.

3. A method according to at least one of Claims 1 to 3, **characterized in that** the concentration of iron in the silicon is 0.5 to 10 weight percent.

4. A method according to at least one of Claims 1 to 3, **characterized in that** the concentration of iron in the silicon is 1 to 5 weight percent.

5. A method according to at least one of Claims 1 to 4, **characterized in that** the reaction is carried out at a pressure of 1 to 40 bar (absolute).

6. A method according to at least one of Claims 1 to 5, **characterized in that** the reaction is carried out at temperatures from 400 to 800°C.

7. A method according to at least one of Claims 1 to 6, **characterized in that** the mol ratio of hydrogen to silicon tetrachloride is 0.25:1 to 4:1.

8. A method according to at least one of Claims 1 to 7, **characterized in that** hydrogen chloride is added when reacting silicon with silicon tetrachloride and hydrogen.

9. A method according to at least one of Claims 1 to 8, **characterized in that** the mol ratio of silicon tetrachloride to hydrogen chloride is 1:0 to 1:10.

10. A method for producing silane and/or hyper-pure silicon, **characterized in that** the starting material is trichlorosilane which is produced by employment of silicon which contains homogeneously distributed iron silicide.

## Revendications

1. Procédé de fabrication de trichlorosilane par réaction du silicium avec de l'hydrogène, du tétrachlorure de silicium et, le cas échéant, du chlorure d'hydrogène, **caractérisé en ce que** l'on met en oeuvre du silicium contenant du siliciure de fer réparti de manière homogène.

2. Procédé selon la revendication 1, **caractérisé en ce que** le silicium mis en oeuvre est fabriqué par granulation aqueuse.

3. Procédé selon au moins une des revendications 1 à 2, **Caractérisé en ce que** la concentration du fer dans le silicium va de 0,5 à 10 % en poids.

4. Procédé selon au moins une des revendications 1 à 3, **caractérisé en ce que** la concentration du fer dans le silicium va de 1 à 5 % en poids.

5. Procédé selon au moins une des revendications 1 à 4, .**caractérisé en ce que** la réaction est réalisée à une pression de 1 à 40 bars (absolus).

6. Procédé selon au moins une des revendications 1 à 5, **caractérisé en ce que** la réaction est réalisée à des températures allant de 400 à 800°C.

7. Procédé selon au moins une des revendications 1 à 6, **caractérisé en ce que** le rapport molaire hydrogène / tétrachlorure de silicium va de 0,25/1 à 4/1.

8. Procédé selon au moins une des revendications 1 à 7, **caractérisé en ce que**, au cours de la réaction du silicium avec du tétrachlorure de silicium et de l'hydrogène, on ajoute du chlorure d'hydrogène.

9. Procédé selon au moins une des revendications 1 à 8, **caractérisé en ce que** le rapport molaire du tétrachlorure de silicium / chlorure d'hydrogène va de 1/0 à 1/10.

10. Procédé de fabrication de silane ou de silicium hautement pur, **caractérisé en ce que** l'on part du trichlorosilane qui est fabriqué en mettant en oeuvre du silicium contenant du siliciure de fer réparti de manière homogène.
